(19) Europäisches Patentamt
European Patent Office
Office européen des brevets

(11) **EP 4 592 202 A1**

(12) **EUROPEAN PATENT APPLICATION**
published in accordance with Art. 153(4) EPC

(43) Date of publication:
**30.07.2025 Bulletin 2025/31**

(21) Application number: **23882176.3**

(22) Date of filing: **21.07.2023**

(51) International Patent Classification (IPC):
**B64G 3/00** *(2006.01)*     **G06T 11/20** *(2006.01)*
**G06T 19/00** *(2011.01)*

(52) Cooperative Patent Classification (CPC):
**B64G 3/00; G06T 11/20; G06T 19/00**

(86) International application number:
**PCT/JP2023/026839**

(87) International publication number:
**WO 2024/089959 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.10.2022  JP 2022170492**

(71) Applicant: **NEC Corporation
108-8001 Tokyo (JP)**

(72) Inventor: **MORI, Hironobu
Tokyo 108-8001 (JP)**

(74) Representative: **Vossius & Partner
Patentanwälte Rechtsanwälte mbB
Siebertstraße 3
81675 München (DE)**

(54) **DISPLAY SYSTEM, DISPLAY METHOD, AND RECORDING MEDIUM**

(57)    A display system acquires data indicating an orbit of a satellite and time-series data related to the artificial satellite, and performs a three-dimensional graphics display of the orbit of the artificial satellite and a graph of the time-series data such that the orbit of the artificial satellite matches the time axis of the graph of the time-series data.

FIG. 1

# Description

## TECHNICAL FIELD

The present disclosure relates to a display system, a display method, and a recording medium.

## BACKGROUND ART

The orbit of a satellite and time-series data relating to that satellite may be displayed. For example, the satellite design support device described in Patent Document 1 displays the orbit of an artificial satellite in a graphical editing window using a three-dimensional model animation, and displays graphs of power balance, and the like in a time chart window with time passing from left to right.

## Prior Art Documents

## Patent Documents

Patent Document 1: Japanese Patent Application Publication No. 2010-086092

## SUMMARY OF INVENTION

## Problems to be Solved by the invention

In a case where the orbit of an artificial satellite and the time-series data related to that artificial satellite are displayed simultaneously, it is preferable that a user viewing the image can easily grasp the relationship between the orbit of the artificial satellite and the time-series data.

An example of an objective of the present disclosure is to provide a display system, a display method, and a recording medium that can solve the above-mentioned problems.

## Means for Solving the Problem

According to a first example aspect of the present disclosure, a display system includes a data acquisition means for acquiring data indicating an orbit of an artificial satellite and time-series data related to the artificial satellite, and a display means for performing a three-dimensional graphics display of the orbit of the artificial satellite and a graph of the time-series data such that the orbit of the artificial satellite matches the time axis of the graph of the time-series data.

According to a second example aspect of the present disclosure, a display method includes a display system acquiring data indicating an orbit of an artificial satellite and time-series data related to the artificial satellite, and performing a three-dimensional graphics display of the orbit of the artificial satellite and a graph of the time-series data such that the orbit of the artificial satellite matches the time axis of the graph of the time-series data.

According to a third example aspect of the present disclosure, a recording medium stores a program for causing a computer controlling a display system to acquire data indicating an orbit of an artificial satellite and time-series data related to the artificial satellite; and perform a three-dimensional graphics display of the orbit of the artificial satellite and a graph of the time-series data such that the orbit of the artificial satellite matches the time axis of the graph of the time-series data.

## Effect of Invention

According to the present disclosure, in a case where the orbit of an artificial satellite and time-series data related to that artificial satellite are displayed simultaneously, it is expected that a user viewing an image will be able to relatively easily ascertain the relationship between the orbit of the artificial satellite and the time-series data.

## BRIEF DESCRIPTION OF DRAWINGS

[FIG. 1] FIG. 1 illustrates a configuration of a display system according to some example embodiments of the present disclosure.
[FIG. 2] FIG. 2 is a diagram showing an example of the display of a satellite orbit and a graph of time-series data by the display system according to some example embodiments of the present disclosure.
[FIG. 3] FIG. 3 is a diagram showing an example of a display in which the orbit of an artificial satellite and a graph of time-series data relating to the artificial satellite are displayed in separate windows.
[FIG. 4] FIG. 4 is a diagram illustrating an example of a vector indicating the direction of a value axis in some example embodiments of the present disclosure.
[FIG. 5] FIG. 5 illustrates an example of the processing steps for generating and displaying a three-dimensional graphics image of an artificial satellite by a display system according to some example embodiments of the present disclosure.
[FIG. 6] FIG. 6 is a diagram showing an example of a configuration in which the display system according to some example embodiments of the present disclosure is configured as a single device.
[FIG. 7] FIG. 7 is a diagram showing an example of a configuration in which the display system according to some example embodiments of the present disclosure is configured with multiple devices.
[FIG. 8] FIG. 8 illustrates another example configuration of the display system according to some example embodiments of the present disclosure.
[FIG. 9] FIG. 9 is a diagram showing an example of a processing procedure in a display method according to some example embodiments of the present disclosure.

[FIG. 10] FIG. 10 is a schematic block diagram illustrating a computer configuration according to at least one example embodiment.

EXAMPLE EMBODIMENTS

Hereinbelow, example embodiments of the present disclosure will be described, but the following example embodiments do not limit the invention according to the claims. Furthermore, not all of the combinations of features described in the example embodiments are necessarily essential to the solution of the invention.

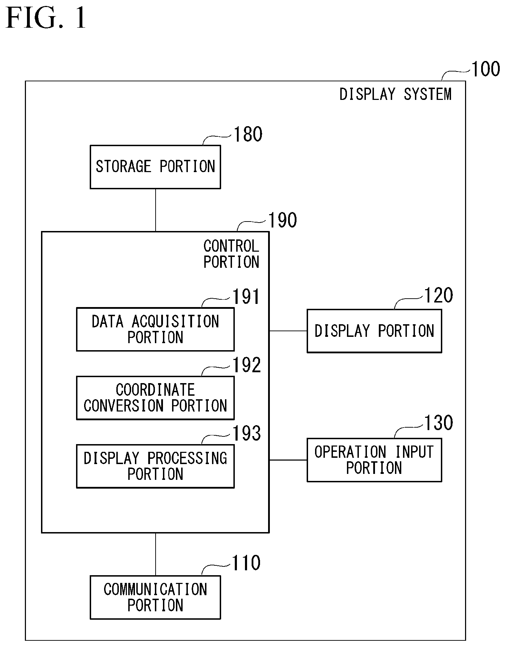

FIG. 1 is a diagram illustrating a configuration of a display system according to some example embodiments of the present disclosure. In the configuration shown in FIG. 1, a display system 100 is provided with a communication portion 110, a display portion 120, an operation input portion 130, a storage portion 180, and a control portion 190. The control portion 190 includes a data acquisition portion 191, a coordinate conversion portion 192, and a display processing portion 193.

The display system 100 obtains data indicating the orbit of an artificial satellite and time-series data relating to the artificial satellite, and performs a three-dimensional graphics display of a graph of the orbit of the artificial satellite and the time-series data. The time-series data relating to the artificial satellite is also simply referred to as time-series data.

The display system 100 displays an image of the Earth, the orbit of the artificial satellite, and a graph of the time-series data related to the satellite so that (1) the orbit of the artificial satellite and the time axis of the graph of the time-series data match, (2) the time on the time axis of the graph of the time-series data matches the passage time of the satellite on the satellite's orbit, (3) the orbit of the satellite in three-dimensional space and the value axis, which is the axis other than the time axis of the graph of the time-series data, are perpendicular to each other, and (4) the orbit of the satellite is located around the Earth in the displayed image and the value axis of the graph of the time-series data is oriented outward with respect to the Earth. The value axis of the graph of time-series data is an axis of the graph of time-series data other than the time axis.

The display system 100 may be configured to include a computer such as a workstation (WS) or a personal computer (PC).

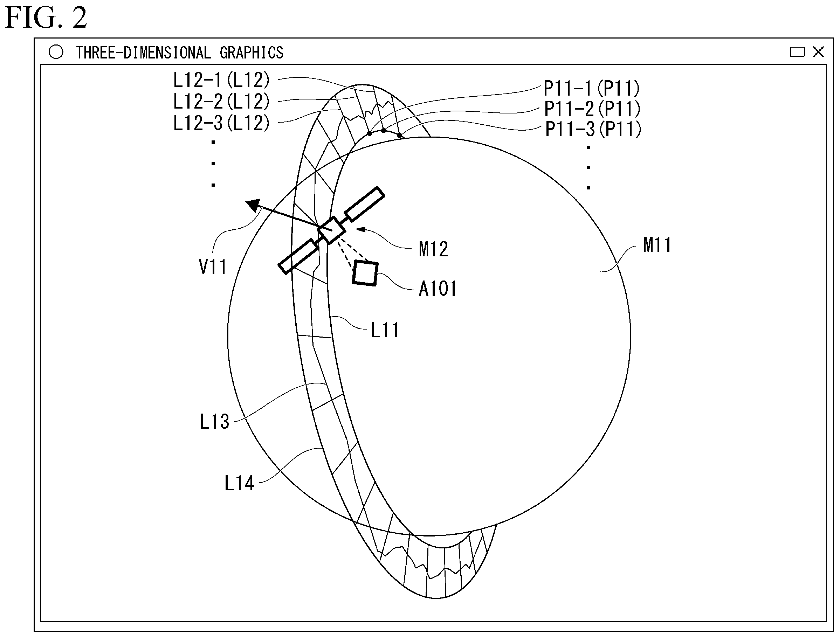

FIG. 2 is a diagram showing an example of the display of the orbit of an artificial satellite and a graph of time-series data by the display system 100.

In the example of FIG. 2, M11 is an image of the Earth.

Line L11 is the orbit of the artificial satellite. Moreover, line L11 represents the time axis of the graph of the time-series data relating to that satellite.

Points P11-1, P11-2, P11-3, ... each indicate the position of the artificial satellite on the orbit indicated by line L11 at a certain time. Points P11-1, P11-2, P11-3, ... are also collectively referred to as point P11.

Hereinafter, the position of the artificial satellite on the orbit indicated by the line L11 will also be simply referred to as the position of the artificial satellite.

Lines L12-1, L12-2, L12-3, ... each represent a value axis of a graph of time-series data. The lines L12-1, L12-2, L12-3, ... are also collectively referred to as line L12.

Furthermore, the display system 100 displays the line L12-1 such that the point P11-1 is one of the end points of the line L12-1. Line L12-1 also corresponds to the line that indicates the time in a case where the artificial satellite is at the position of point P11-1.

Furthermore, the display system 100 displays the line L12-2 such that the point P11-2 is one of the end points of the line L12-2. The line L12-2 also corresponds to the line that indicates the time in a case where the artificial satellite is at the position of point P11-2.

Furthermore, the display system 100 displays the line L12-3 such that the point P11-3 is one of the end points of the line L12-3. The line L12-3 also corresponds to the line that indicates the time in a case where the artificial satellite is at the position of point P11-3.

In this way, the lines L12-1, L12-2, L12-3, ... also correspond to lines representing certain times. The display system 100 may may be configured to display the lines L12-1, L12-2, L12-3, ... such that the lines L12-1, L12-2, L12-3, ... represent equal-interval times.

A line L13 indicates values of time-series data for each time point.

A line L14 indicates a certain value of the time-series data, such as an upper limit value of the time-series data. The display system 100 may be configured not to display a line indicating the upper limit of the time-series data value. Furthermore, the upper limit of the time-series data does not need to be determined.

M12 is an image of an artificial satellite. The display system 100 displays an image of the artificial satellite at the position of the satellite at a certain time. Furthermore, in order to display the image of the artificial satellite in an easily understandable manner, the display system 100 displays the image of the artificial satellite larger than the actual ratio of the size of the artificial satellite to the size of the Earth.

The position at which the display system 100 displays the image of the artificial satellite is not limited to the position of the artificial satellite at a specific time. The display system 100 may display satellite images in real time. That is, the display system 100 may display an image of the artificial satellite at the position of the satellite at the current time.

The display system 100 may also display an image of the artificial satellite at the position of the satellite at a certain time in the past. The display system 100 may display an image of the artificial satellite at the position of the satellite at a future time.

Furthermore, the display system 100 may display an image of the artificial satellite at the position of the artificial satellite at each of a plurality of times. Therefore, the display system 100 may display multiple images of an artificial satellite. Moreover, the display system 100 may be configured not to display images of an artificial satellite.

Furthermore, the display system 100 may display an image by changing the time of the display object. For example, as time progresses for the object to be displayed, the display system 100 may change information about the Earth's surface, such as the positions of the oceans and continents shown in the Earth's image M11, in accordance with the Earth's rotation, and may also change the position of the artificial satellite image M12.

Furthermore, the display system 100 may display an image by changing the viewing direction in a three-dimensional graphics display. For example, the display system 100 may change information about the Earth's surface, such as the positions of the oceans and continents shown in the Earth image M11, and the position of the artificial satellite image M12, depending on the viewing direction specified by the user.

V11 is an arrow (vector) indicating the direction of the sun as seen from the artificial satellite.

FIG. 2 also shows an example in which an artificial satellite captures an image of a portion of the Earth's surface. Area A101 indicates an area imaged by the satellite from the position of the satellite indicated by the image M12. However, the artificial satellite that is the subject of display by the display system 100 is not limited to artificial satellites for specific purposes. Moreover, the display system 100 may be configured not to display the area A101.

The display system 100 may be configured not to display some of the portions of the image illustrated in FIG. 2. For example, the display system 100 may be configured not to display the arrow V11.

In the example of FIG. 2, the display system 100 displays the orbit of the artificial satellite and a graph of the time-series data related to that satellite so that the orbit of the artificial satellite matches the time axis of the graph of the time-series data related to that satellite (above (1)). The orbit of the artificial satellite and the time axis of the graph of the time-series data are both represented by a line L11.

It is expected that this will enable a user (e.g., a satellite operator) viewing the three-dimensional graphics image shown in FIG. 2 to easily ascertain that the graph of lines L11 to L14 is a graph of time-series data regarding a satellite passing through the orbit indicated by line L11. In this way, according to the display system 100, in a case where a satellite's orbit and time-series data related to that satellite are displayed simultaneously, it is expected that a user viewing the image will be able to relatively easily ascertain the relationship between the satellite's orbit and the time-series data.

Also, in the example of FIG. 2, the display system 100 displays the orbit of the satellite and the graph of the time-series data such that the time on the time axis of the graph of the time-series data related to the satellite matches the time of the passage of the satellite in its orbit (above (2)). The time indicated by the line L12-1 in the graph is the same as the passage time of the satellite indicated by point P11-1, which is one end point of line L12-1 on the satellite orbit. Similarly, for each combination of line L12-2 and point P11-2, line L12-3 and point P11-3, ..., the line and point represent the same time.

It is expected that this will make it easier for a user viewing the three-dimensional graphics image shown in FIG. 2 to understand the correspondence between the times on the graph of lines L11 to L14 and the passage times of the artificial satellite in the orbit shown by line L11. In this way, according to the display system 100, in a case where a satellite's orbit and time-series data related to that satellite are displayed simultaneously, it is expected that a user viewing the image will be able to relatively easily ascertain the relationship between the satellite's orbit and the time-series data.

In addition, in the example of FIG. 2, the display system 100 displays the satellite orbit and the graph of the time-series data so that the satellite orbit in three-dimensional space and the value axis of the graph of the time-series data are perpendicular to each other (above (3)). The orbit of the artificial satellite is shown by line L11. The value axis of the graph is indicated by line L12. The line L12 is displayed so as to intersect at right angles with the line L11 in the three-dimensional space.

It is expected that this will make it easier for a user viewing the three-dimensional graphics image shown in FIG. 2 to read the time-series data values from the graph.

In addition, in the example of FIG. 2, the display system 100 performs display such that the orbit of the artificial satellite is positioned around the Earth in the displayed image, and the value axis of the graph of the time-series data is oriented outward relative to the Earth (above (4)). The line L12 representing the value axis is displayed pointing outward from the Earth shown in image M11.

As a result, the display system 100 displays a graph of time-series data relating to the artificial satellite outside the Earth shown in image M11. In particular, for time periods in a case where the satellite orbit is in front of the Earth (on the side of the viewpoint assumed in the three-dimensional graphics display), the display system 100 can display the graph so that it is not hidden by the Earth. In this respect, it is expected that the display system 100 will make it easier for users viewing the image to view the graph.

The display system 100 may display the graph of time-series data for the time periods in a case where the satellite orbit is on the other side of the Earth, for example by displaying the image M11 of the Earth semi-transparently.

In addition, if a user wishes to refer to the graph of time-series data for a time period in a case where the orbit of an artificial satellite is on the other side of the Earth, the display system 100 may display the graph of the time-series data for the time period the user wishes to refer to in front of the Earth, for example by changing the viewing direction in the three-dimensional graphics display in accordance with the user's instructions.

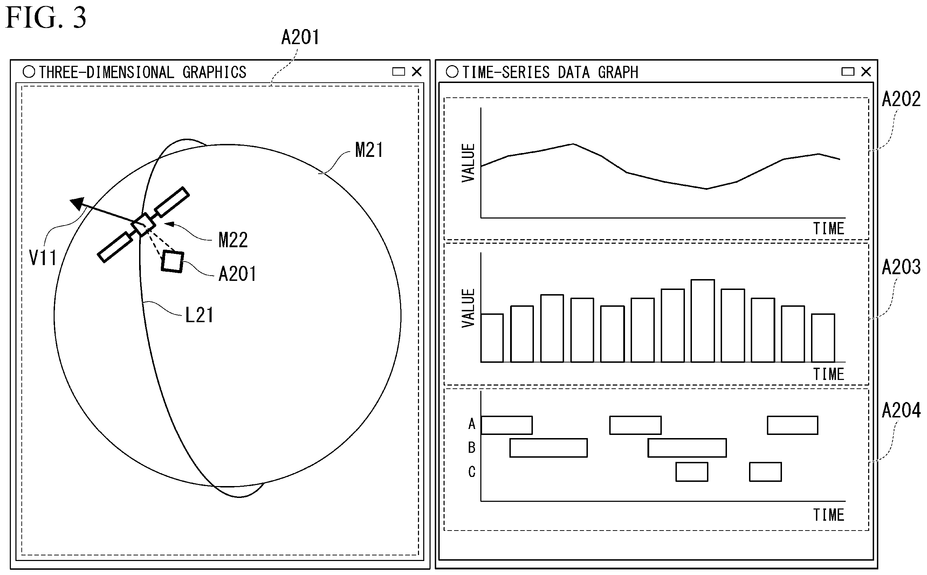

Furthermore, in addition to or instead of displaying a graph of the time-series data at a position corresponding to the position of the satellite's orbit as illustrated in FIG. 2, the display system 100 may display a graph of the time-series data separately from the display of the satellite's orbit as illustrated in FIG. 3.

FIG. 3 is a diagram showing an example of a display in which the orbit of an artificial satellite and a graph of time-series data relating to that artificial satellite are displayed in separate windows.

In the example of FIG. 3, a display system for displaying data relating to an artificial satellite displays a three-dimensional graphics display window and a time-series data graph display window on a display screen.

This display system displays the orbit of an artificial satellite in three-dimensional graphics in an area A201 of a three-dimensional graphics display window. In the example of FIG. 3, M21 is an image of the Earth. Line L21 is the orbit of the artificial satellite. M22 is an image of an artificial satellite. V21 is an arrow (vector) indicating the direction of the sun as seen from the artificial satellite. Area A201 indicates the area imaged by the satellite from the position of the satellite indicated in image M22.

This display system also displays graphs of different time-series data in areas A202, A203, and A204 of the time-series data graph display window. The time-series data displayed in the time-series data graph display window is all the time-series data relating to the artificial satellite whose orbit is displayed by the line L21 in the three-dimensional graphics display window.

In the area A202, the display system displays the time-series data in a line graph with the horizontal axis representing time and the vertical axis representing the value axis.

In the area A203, the display system displays a graph of time-series data showing values for each time period in the form of a bar graph with the horizontal axis representing time and the vertical axis representing the value axis.

In the area A204, the display system displays binary time-series data for each of the three items, "A," "B," and "C," in a graph with the horizontal axis representing time and the vertical axis representing the item.

Comparing the display example of FIG. 2 with the display example of FIG. 3, FIG. 2 displays the orbit and the graph integrally, and is expected to make it easier to grasp the correspondence between the orbit and the graph than FIG. 3, in which the orbit and the graph are displayed separately. For example, even in a case where orbits and graphs of time-series data for multiple artificial satellites are displayed, the display method illustrated in FIG. 2 makes it easy to grasp the correspondence between the orbits and the graphs because the orbits and the graphs are displayed integrally.

In addition, according to the display method illustrated in FIG. 2, the orbit and the graph are displayed integrally, so that the user needs to move his or her eyes relatively little in a case where referring to the orbit and the graph, thereby reducing the burden on the user.

The display system 100 may be configured to switch between an integrated display of the satellite orbit and a graph of the time-series data as illustrated in FIG. 2 and a separate display of the satellite orbit and graphs of the time-series data as illustrated in FIG. 3 in response to a user operation. The integrated display of the satellite orbit and the graph of time-series data as exemplified in FIG. 2 is also referred to as an integrated display. The separate display of the satellite orbit and the graph of the time-series data as exemplified in FIG. 3 is also referred to as an individual display.

As described above, it is expected that the integrated display will make it easier for the user to understand the relationship between the satellite orbit and the time-series data. On the other hand, in the individual display, the graph can be displayed so that the time axis is represented as a straight line, and in this respect, it is expected that the graph will be easier for the user to read.

For example, a user can ascertain the time at which he or she wishes to read the value of the time-series data in the integrated display, and then switch to the individual display to read the value of the time-series data at that time.

The graph of time-series data displayed by the display system 100 with the satellite orbit as the time axis is not limited to the line graph exemplified in FIG. 2, but may be various types of graphs. For example, the display system 100 can be configured to display various types of graphs, such as a bar graph as illustrated in area A203 of FIG. 3, a graph showing binary data as illustrated in area A204, a Gantt chart, or a step graph, with the satellite's orbit as the time axis.

In the configuration of the display system 100 shown in FIG. 1, the communication portion 110 communicates with other devices. For example, various data relating to the artificial satellite, including data indicating the orbit of the artificial satellite and time-series data relating to the artificial satellite, may be received from another device.

However, the method by which the display system 100 acquires the data indicating the orbit of the artificial satellite and the time-series data relating to the artificial satellite is not limited to a specific method. For example, the display system 100 may include a simulator, and the orbit and time-series data of the artificial satellite may be calculated by simulation.

The display portion 120 includes a display screen, such as a liquid crystal panel or an LED (Light Emitting Diode) panel, and displays various images under the control of the control portion 190. In particular, the display portion 120 performs an integrated display of the orbit of an artificial satellite and time-series data relating to the artificial satellite, as described with reference to FIG. 2. As described above with respect to the display system 100, the display portion 120 may also separately display the orbit of the artificial satellite and graphs of the time-series data as exemplified in FIG. 3. As described above with respect to the display system 100, the display portion 120 may be configured to switch between an integrated display and individual display in response to a user operation.

The display portion 120 corresponds to an example of a display means.

The operation input portion 130 includes input devices such as a keyboard and a mouse, and receives user operations. The operation input portion 130 may receive a user operation to instruct display of the orbit of an artificial satellite and time-series data relating to the artificial satellite. The operation input portion 130 may also receive a user operation to specify the artificial satellite for which orbits and time-series data are to be displayed. In a case where there are multiple pieces of time-series data, the operation input portion 130 may receive a user operation to specify the time-series data to be displayed. In a case where the display portion 120 is capable of displaying both the integrated display and the individual display, the operation input portion 130 may be configured to receive a user operation for instructing switching between the integrated display and the individual display.

The storage portion 180 stores various types of data. For example, the storage portion 180 stores data indicating the orbit of an artificial satellite and time-series data relating to the artificial satellite. The storage portion 180 may store various data relating to artificial satellites that the communication portion 110 receives from other devices. The storage portion 180 is configured using a storage device provided in the display system 100.

The control portion 190 controls each unit of the display system 100 to perform various processes. The functions of the control portion 190 may be performed by a CPU (Central Processing Unit) included in the display system 100 reading and executing a program from the storage portion 180.

The data acquisition portion 191 acquires data indicating the orbit of an artificial satellite and time-series data relating to the artificial satellite. For example, the data acquisition portion 191 may extract various data, such as data indicating the orbit of an artificial satellite and time-series data relating to that artificial satellite, from data received by the communication portion 110 from another device. The data acquisition portion 191 may then store the extracted data in the storage portion 180, and read the data from the storage portion 180 in a case where the data is to be used.

In the following, an example will be described in which the data acquisition portion 191 acquires satellite orbit data, satellite attitude data, imaging location data, satellite telemetry information, and celestial body position data from another device via the communication portion 110.

The satellite orbit data indicates the orbital position of an artificial satellite in real space. In the example of FIG. 2, the satellite orbit data is data that indicates the position in real space of the orbit of the artificial satellite indicated by the line L11. The data acquisition portion 191 acquires satellite orbit data that indicates the position of the artificial satellite at each time.

The satellite attitude data is data that indicates the attitude (orientation and inclination) of the artificial satellite in real space. In the example of FIG. 2, the satellite attitude data is data that indicates the orientation in real space of the artificial satellite represented by the image M12. The data acquisition portion 191 acquires satellite attitude data that indicates the attitude of the artificial satellite at each time.

The imaging point data is data that indicates an area of the Earth's surface in real space that is imaged by an artificial satellite. In the example of FIG. 2, the imaging location data is data indicating an area captured by an artificial satellite, which is indicated by area A101. The data acquisition portion 191 acquires imaging location data indicating an imaging location (an area imaged by an artificial satellite) at each imaging time.

Satellite telemetry information is information obtained through communication with artificial satellites. The satellite telemetry information includes time-series data about the satellite or the data that is the source of the time-series data. In the example of FIG. 2, the time-series data obtained from the satellite telemetry information is data indicating data values for each time, as indicated by line L13.

For example, the satellite telemetry information acquired by the data acquisition portion 191 may include information on the power consumption and heat generation of the artificial satellite during transmission of the satellite telemetry information. However, the time-series data included in the satellite telemetry information or the data that is the source of the time-series data is not limited to a specific one.

The celestial object position data is data that indicates the positions of celestial objects. In the example of FIG. 2, the celestial body position data is data for calculating the direction of the sun as seen from the artificial satellite, as indicated by an arrow V11. For example, the data acquisition portion 191 acquires celestial position data that indicates the position of the sun as seen from the earth at each time.

However, the data acquired by the data acquisition portion 191 is not limited to a specific type of data, and may be various information that can acquire the orbit of an artificial satellite and time-series data related to the artificial satellite.

Moreover, the data acquired by the data acquisition portion 191 may be measured values (performance data) or calculated values obtained by simulation or the like. Alternatively, the data acquisition portion 191 may acquire data based on measured values and data based on calculated values. For example, the data acquisition portion 191 may acquire the measured value of each piece of data up to the present (time of data acquisition) and the predicted or estimated value of each piece of data for the future.

In a case where it is difficult to predict the time-series data, the data acquisition portion 191 may acquire data up to the present and future data regarding the satellite orbit, and acquire only data up to the present regarding the time-series data. In this case, the display portion 120 may display the current and future orbits of the artificial satellite, and only display the graph up to the present for the time-series data.

The method by which the data acquisition portion 191 acquires data is not limited to acquiring data from another device via the communication portion 110. For example, the display system 100 may include a simulator, and the data acquisition portion 191 may acquire data from the simulator in addition to or instead of acquiring data from another device.

Alternatively, the storage portion 180 may store in advance some or all of the data acquired by the data acquisition portion 191. The data acquisition portion 191 may then acquire the data by reading the data from the storage portion 180.

The coordinate conversion portion 192 calculates the coordinate values in the three-dimensional graphics display of each object to be displayed. The object here is a component in the image to be displayed.

For example, the coordinate conversion portion 192 calculates the coordinate values of the satellite orbit, the position and orientation of a satellite 3D (Three Dimensional) model, the imaging point position, and the sun direction vector from the satellite orbit data, satellite attitude data, imaging location data, and celestial body position data. In the example of FIG. 2, the satellite orbit is indicated by the line L11. The satellite 3D model is shown in the image M12. The image capturing location is indicated in the area A101. The sun direction vector is indicated by the arrow V11.

The method by which coordinate conversion portion 192 calculates the coordinate values of each object in the three-dimensional graphics display is not limited to a specific method. For example, the coordinate conversion portion 192 may calculate the coordinate values using a known coordinate conversion method in three-dimensional graphics.

Furthermore, the coordinate conversion portion 192 calculates the plot positions of the graph of the time-series data relating to the artificial satellite, based on the satellite orbit data and the satellite telemetry information.

In the example of FIG. 2, the coordinate values of the line L11 in the three-dimensional graph display, which are calculated by the coordinate conversion portion 192 as the plot position of the satellite orbit, also correspond to the plot position on the time axis of the time-series graph.

Furthermore, the coordinate conversion portion 192 calculates the coordinate values in the three-dimensional graph display of the line L12 indicating the value axis so that the line L12 is perpendicular to the line L11 in the three-dimensional space and points away from the line L11 toward the outside of the earth.

Furthermore, the coordinate conversion portion 192 calculates the coordinate values in the three-dimensional graph display of the line L13 indicating the time-series data value for each time such that the coordinate values correspond to a position on the value axis indicating the time-series data value at that time. For times in a case where the value axis is not explicitly shown, i.e., in a case where the line L12 is not displayed, the coordinate conversion portion 192 plots a point indicating the time-series data value in three-dimensional space, perpendicular to the line L11 and at a position outside the earth from the line L11, as viewed from the position of the corresponding time on the line L11, in the same manner as in a case where the value axis is explicitly shown.

In addition, the coordinate conversion portion 192 calculates the coordinate values in the three-dimensional graph display of the line L14, which indicates the maximum value of the time-series data, so that the line L14 is displayed at a position in three-dimensional space that is shifted from the line L11 in the direction of the value axis by a distance equivalent to the maximum value.

The coordinate conversion portion 192 may calculate the direction of the value axis by using a method for calculating the cross product of vectors in a three-dimensional space.

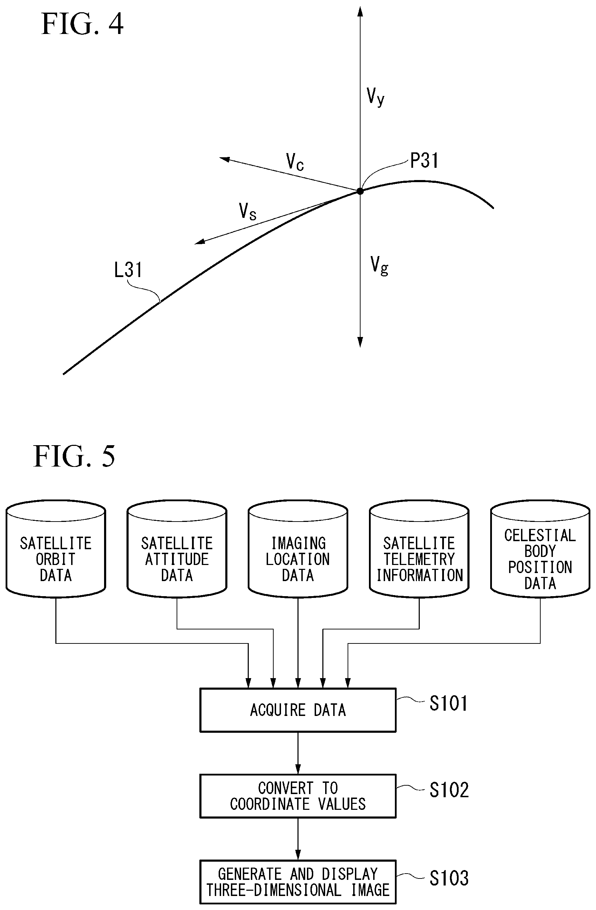

FIG. 4 is a diagram showing an example of vectors indicating the direction of the value axis.

In the example of FIG. 4, line L31 indicates the orbit of an artificial satellite. Point P31 indicates a point on the orbit of the artificial satellite. Vector $V_g$ is a vector that points from the point P31 toward the center of the Earth. Vector $V_s$ indicates the direction of travel of the satellite at the point P31.

In the example of FIG. 4, the coordinate conversion portion 192 calculates a vector $V_c$, which is the cross product of the vectors $V_g$ and $V_s$ as shown in Equation (1).

[Equation 1]

$$V_c = V_g \times V_s \qquad \cdots (1)$$

Here, "$\times$" represents the cross product of vectors.

Vector $V_c$ is orthogonal to both vectors $V_g$ and $V_s$.

Then, the coordinate conversion portion 192 calculates a vector $V_y$, which is the cross product of vectors $V_c$ and $V_s$, as shown in Equation (2), as a vector indicating the direction of the value axis at point P31.

[Equation 2]

$$V_y = V_c \times V_s \qquad \cdots (2)$$

The vector $V_y$ is orthogonal to both vectors $V_c$ and $V_s$. Also, according to equations (1) and (2), the vector $V_y$ points outward with respect to the Earth.

In this way, the coordinate conversion portion 192 can use the vector cross product calculation method to calculate the direction of the value axis so that it is perpendicular to the satellite's orbit and points outward relative to the Earth.

In a case where the time interval of the time-series data is large, the coordinate conversion portion 192 may interpolate the data. In this case, the coordinate conversion portion 192 may interpolate data at time intervals determined according to the time it takes for the artificial satellite to orbit the Earth. For example, in the case of an artificial satellite that orbits the earth once every 90 minutes, the coordinate conversion portion 192 may interpolate data at 10 second intervals.

As shown in FIG. 2, in the three-dimensional graphics image displayed by the display portion 120, a curved line indicating the orbit of an artificial satellite is used as the time axis of a graph of time-series data. Therefore, the time axis is represented by a curve. In a case where the time interval of the time-series data is large, if the coordinate conversion portion 192 draws a line indicating the data values without taking into account the curvature of the time axis, such as by connecting points indicating the time-series data with a straight line, the accuracy of the graph will be low at times far from the times at which the time-series data exists.

In response to this, the coordinate conversion portion 192 can interpolate time-series data, thereby improving the accuracy of the graph displayed by the display portion 120 to a graph that follows a curve indicating the time axis, and in this respect, the graph displayed by the display portion 120 can be made more accurate.

Furthermore, by the coordinate conversion portion 192 interpolating data at time intervals determined according to the time it takes for the satellite to orbit the Earth, the data interpolation interval can be determined in relation to the curvature of the curve indicating the time axis, making it possible to achieve a trade-off between the accuracy of the graph and the processing load of data interpolation.

The display processing portion 193 generates image data of a three-dimensional graphics image based on the coordinate values acquired by the coordinate conversion portion 192, and causes the display portion 120 to display the generated image data. The method by which the display processing portion 193 generates image data of a three-dimensional graphics image and displays the generated image data on the display portion 120 is not limited to a specific method. For example, the display processing portion 193 may generate image data of a three-dimensional graphics image using an existing computer graphics library, and cause the display portion 120 to display the generated image data.

The display system 100 may provide a third coordinate axis in the direction of the vector $V_c$ in FIG. 4 to display a three-dimensional graph of the time-series data.

Furthermore, the display system 100 may display multiple graphs with the orbit of the artificial satellite as the time axis, such as displaying a graph of time-series data having the value axis in the direction of the vector $V_c$ in FIG. 4 in addition to a graph of time-series data having a value axis in the direction of the vector $V_y$ in FIG. 4.

FIG. 5 is a diagram showing an example of a processing procedure in which the display system 100 generates and displays a three-dimensional graphics image relating to an artificial satellite.

In the process of FIG. 5, the data acquisition portion 191 acquires satellite orbit data, satellite attitude data, imaging location data, satellite telemetry information, and celestial body position data (Step S101).

Next, the coordinate conversion portion 192 uses the data acquired by the data acquisition portion 191 to calculate coordinate values for displaying a three-dimensional graphics image (Step S102). Specifically, the coordinate conversion portion 192 converts position information in real space, which is indicated in the data acquired by the data acquisition portion 191, into coordinate values in a three-dimensional graphics image.

Next, the display processing portion 193 generates a three-dimensional graphics image based on the coordinate values calculated by the coordinate conversion portion 192, and controls the display portion 120 to display the generated three-dimensional graphics image (Step S103).

After Step S103, the display system 100 ends the series of processes.

The display system 100 may execute the process of FIG. 5 every time it acquires measurement data from another device. Moreover, the display system 100 may execute the process of FIG. 5 every time it receives a user operation that specifies a time that should be the current time in the display.

The display system 100 may be configured as a single device.

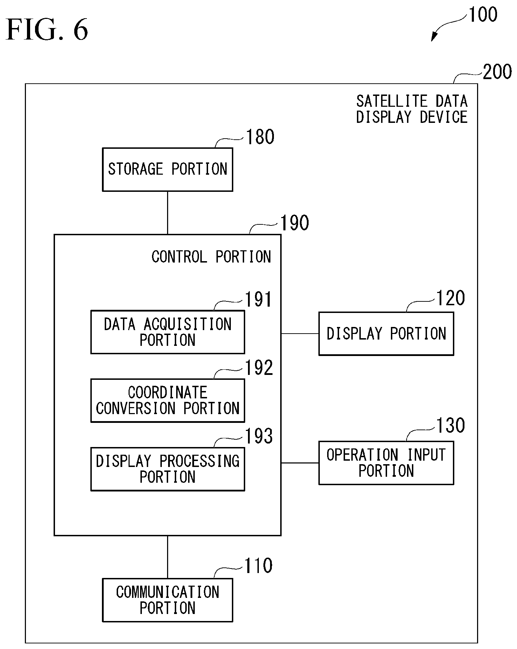

FIG. 6 is a diagram showing an example of the configuration in a case where the display system 100 is configured as a single device.

In the configuration shown in FIG. 6, the display system 100 is provided with a satellite data display device 200. The satellite data display device 200 is provided with a communication portion 110, a display portion 120, an operation input portion 130, a storage portion 180, and a control portion 190. The control portion 190 includes a data acquisition portion 191, a coordinate conversion portion 192, and a display processing portion 193.

The individual components of the satellite data display system 200 are similar to those of the display system 100 in FIG. 1, and so are given the same reference numerals (110, 120, 130, 180, 190, 191, 192, 193) and will not be described in detail here.

The satellite data display device 200 performs the functions of display system 100 of FIG. 1. The satellite data display device 200 may be configured to include, in a single housing, a computer that performs the functions of the communication portion 110, the storage portion 180, and the control portion 190, a display screen that performs the functions of the display portion 120, and an operation input device that performs the functions of the operation input portion 130.

The display system 100 may be composed of multiple devices.

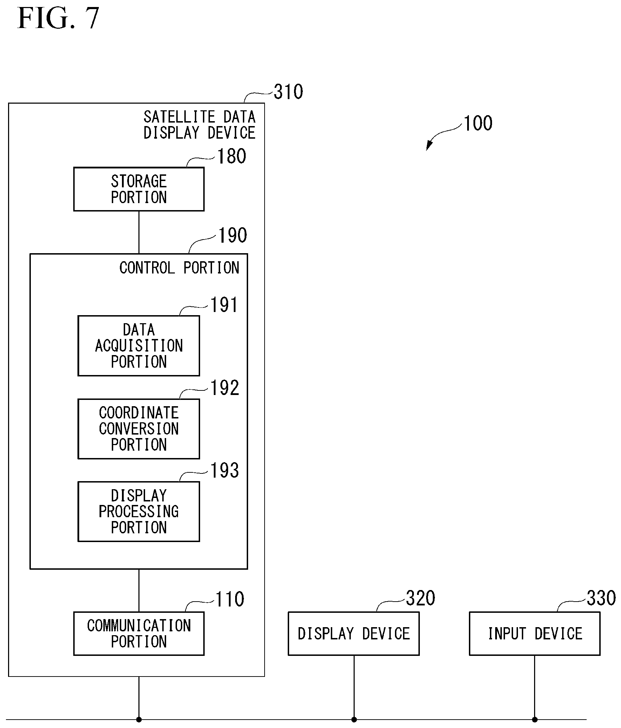

FIG. 7 is a diagram showing an example of a configuration in which the display system 100 is made up of a plurality of devices.

In the configuration shown in FI4G. 7, the display system 100 includes a display control device 310, a display device 320, and an input device 330. The display control device 310 includes a communication portion 110, a storage portion 180, and a control portion 190. The control portion 190 includes a data acquisition portion 191, a coordinate conversion portion 192, and a display processing portion 193.

The communication portion 110, the storage portion 180, the control portion 190, and each of the parts thereof of the display control device 310 are similar to the communication portion 110, the storage portion 180, the control portion 190, and each of the parts thereof of the display system 100 in FIG. 1, and are thus given the same reference numerals (110, 180, 190, 191, 192, 193) and will not be described in detail here.

The display control device 310 executes the functions of the communication portion 110, the storage portion 180, and the control portion 190 in FIG. 1. The display control device 310 may be configured using a computer.

The display device 320 has a display screen and displays various images under the control of the display control device 310. The display device 320 corresponds to an example of the display portion 120 in FIG. 1.

The input device 330 accepts user operations. The input device 330 corresponds to an example of the operation input portion 130 in FIG. 1.

As described above, the data acquisition portion 191 acquires data indicating the orbit of an artificial satellite and time-series data relating to the artificial satellite. The display portion 120 displays the orbit of an artificial satellite and the graph of the time-series data in three-dimensional graphics so that the satellite's orbit matches the time axis of the graph of the time-series data relating to that satellite.

The display system 100 is expected to enable a user (e.g., a satellite operator) viewing the three-dimensional graphics image displayed by the display portion 120 to easily understand that the graph of time-series data is a graph of time-series data regarding a satellite passing through an orbit indicated by the time axis of the graph. In this way, according to the display system 100, in a case where a satellite's orbit and time-series data related to that satellite are displayed simultaneously, it is expected that a user viewing the image will be able to relatively easily ascertain the relationship between the satellite's orbit and the time-series data.

Furthermore, by the display system 100 displaying the orbit of an artificial satellite and a graph of time-series data relating to that satellite in an integrated manner, as illustrated in FIG. 2, the user viewing the three-dimensional graphics image need not move their eyes as much, and in this respect it is expected that the burden on the user will be relatively small.

In addition, because the display system 100 displays the satellite orbit and a graph of time-series data in three-dimensional graphics, the viewpoint and image size (object size) can be freely changed, allowing the user to view the image from any direction.

The display system 100 can also move the time on the display back or forward, which changes the position of the satellites along their orbits and changes the orientation of the sun direction vector. The user can view the images at different times.

In addition, the display portion 120 displays the orbit of the artificial satellite orbit and the graph of the time-series data such that the time on the time axis of the graph of the time-series data related to the artificial satellite coincides with the passage time of the artificial satellite in the orbit of the artificial satellite.

It is expected that the display system 100 will enable a user viewing the displayed 3D graphics image to easily grasp the correspondence between the time in the graph of the time-series data and the passage time of a satellite along its orbit. In this way, according to the display system 100, in a case where a satellite's orbit and time-series data related to that satellite are displayed simultaneously, it is expected that a user viewing the image will be able to relatively easily ascertain the relationship between the satellite's orbit and the time-series data.

In addition, the display portion 120 displays the orbit of an artificial satellite and a graph of the time-series data related to the satellite so that the orbit of the satellite in three-dimensional space is perpendicular to the value axis, which is the axis other than the time axis, of the graph of the time-series data related to the satellite.

It is expected that this will make it easier for a user viewing the three-dimensional graphics image to read the time-series data values from the graph.

In addition, the display portion 120 displays an image of the Earth, the orbit of the artificial satellite, and a graph of the time-series data so that the orbit of the satellite is positioned around the Earth in the displayed image and the value axis of the graph of the time-series data related to the satellite is oriented outward relative to the Earth.

In this way, the display system 100 displays a graph of time-series data relating to the artificial satellite outside the Earth. In particular, for time periods in a case where the satellite orbit is in front of the Earth (on the side of the viewpoint assumed in the three-dimensional graphics display), the display system 100 can display the graph so that it is not hidden by the Earth. In this respect, it is expected that the display system 100 will make it easier for users viewing the image to view the graph.

As described above, for example by displaying the image M11 of the Earth semi-transparently, the display system 100 may display the graph of time-series data for the time periods even in a case where the orbit of the artificial satellite is on the other side of the Earth.

In addition, if a user wishes to refer to the graph of time-series data for a time period in a case where the orbit of an artificial satellite is on the other side of the Earth, the display system 100 may display the graph of the time-series data for the time period the user wishes to refer to in front of the Earth, for example by changing the viewing direction in the three-dimensional graphics display in accordance with the user's instructions.

Furthermore, in addition to or instead of displaying a graph of the time-series data at a position corresponding to the position of the satellite's orbit as illustrated in FIG. 2, the display system 100 may display a graph of the time-series data separately from the display of the satellite's orbit as illustrated in FIG. 3.

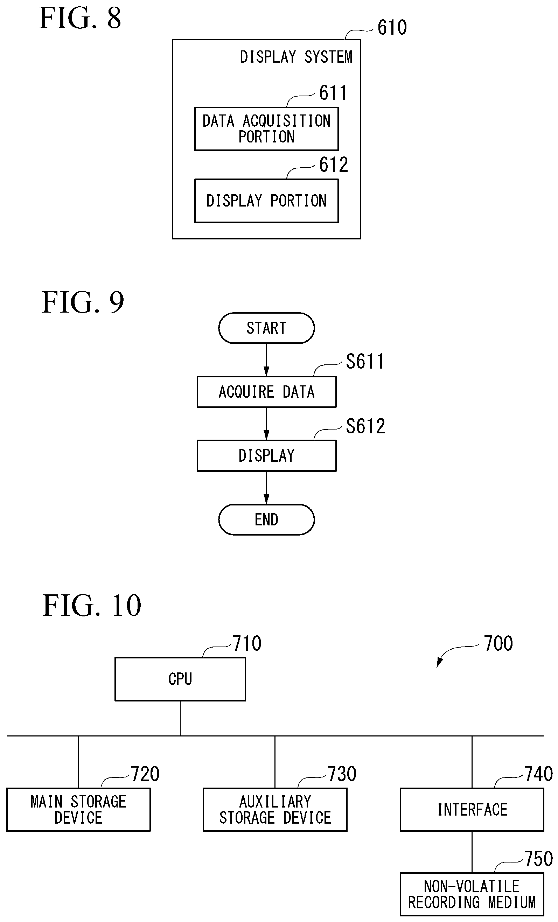

FIG. 8 is a diagram illustrating another example configuration of the display system according to some example embodiments of the present disclosure. In the configuration shown in FIG. 8, a display system 610 is provided with a data acquisition portion 611 and a display portion 612. With this configuration, the data acquisition portion 611 acquires data indicating the orbit of the artificial satellite and time-series data relating to the artificial satellite. The display portion 612 displays the orbit of an artificial satellite and the graph of the time-series data in three-dimensional graphics so that the orbit of the artificial satellite matches the time axis of the graph of the time-series data relating to that satellite.

The data acquisition portion 611 corresponds to an example of a data acquisition means. The display portion 612 corresponds to an example of a display means.

The display system 610 is expected to enable a user (e.g., a satellite operator) viewing the three-dimensional graphics image displayed by the display portion 612 to easily understand that the graph of time-series data is a graph of time-series data regarding a satellite passing through an orbit indicated by the time axis of the graph. In this way, according to the display system 610, in a case where a satellite's orbit and time-series data related to that satellite are displayed simultaneously, it is expected that a user viewing the image will be able to relatively easily ascertain the relationship between the satellite's orbit and the time-series data.

Furthermore, by the display system 610 displaying the orbit of an artificial satellite and a graph of time-series data relating to that satellite in an integrated manner, the user viewing the three-dimensional graphics image need not move their eyes as much, and in this respect it is expected that the burden on the user will be relatively small.

FIG. 9 is a diagram showing an example of a processing procedure in a display method according to some example embodiments of the present disclosure. The display method shown in FIG. 9 includes obtaining data (Step S611) and performing display (Step S612).

In obtaining data (Step S611), the display system obtains data indicating an orbit of an artificial satellite and time-series data relating to the artificial satellite.

In displaying (Step S612), the display system performs a three-dimensional graphics display of the orbit of the artificial satellite and the graph of the time-series data so that the orbit of the satellite coincides with the time axis of the graph of the time-series data related to that satellite.

According to the display method shown in FIG. 9, it is expected that a user (e.g., a satellite operator) viewing the three-dimensional graphics image displayed by the display system will be able to easily understand that the graph of time-series data is a graph of time-series data relating to a satellite passing through an orbit indicated by the time axis of the graph. In this way, according to the display method shown in FIG. 9, in a case where the orbit of an artificial satellite and the time-series data related to that satellite are displayed simultaneously, it is expected that a user viewing the image will be able to relatively easily grasp the relationship between the orbit of the satellite and the time-series data.

Furthermore, in the display method shown in FIG. 9, the orbit of the artificial satellite and a graph of time-series data relating to that satellite are displayed integrally, so that the user viewing the three-dimensional graphics image does not have to move his or her eyes as much, and in this respect it is expected that the burden on the user will be relatively small.

FIG. 10 is a schematic block diagram illustrating a computer configuration according to at least one example embodiment.

In the configuration shown in FIG. 10, a computer 700 is provided with a CPU 710, a main storage device 720, an auxiliary storage device 730, an interface 740, and a non-volatile recording medium 750.

Any one or more of the above-described display system 100, satellite data display device 200, display control device 310, and display system 610, or a part thereof, may be implemented in the computer 700. In this case, the operations of these devices are stored in the auxiliary storage device 730 in the form of a program. The CPU 710 reads the program from the auxiliary storage device 730, loads it into the main storage device 720, and executes the above-mentioned processing in accordance with the program. Furthermore, the CPU 710 reserves storage areas in the main storage device 720 for these devices to perform processing according to the programs. Communication between each device and other devices is performed by the interface 740 having a communication function and performing communication under the control of the CPU 710. The interface 740 also has a port for the non-volatile recording medium 750, and thereby reads information from the non-volatile recording medium 750 and writes information to the non-volatile recording medium 750.

In a case where the display system 100 is implemented in the computer 700, the operations of the control portion 190 and each portion thereof are stored in the form of a program in an auxiliary storage device 730. The CPU 710 reads the program from the auxiliary storage device 730, loads it into the main storage device 720, and executes the above-mentioned processing in accordance with the program.

Furthermore, the CPU 710 reserves a storage area for the storage portion 180 in the main storage device 720 in accordance with the program. Communication with other devices by the communication portion 110 is performed by the interface 740 having a communication function and operating under the control of the CPU 710. The display of various images by the display portion 120 is executed by the interface 740 having a display device and displaying various images under the control of the CPU 710. The operation input portion 130 receives user operations by the interface 740 being equipped with an input device and receiving the user operations under the control of the CPU 710.

In a case where the satellite data display device 200 is implemented in the computer 700, the operations of the control portion 190 and each portion thereof are stored in the auxiliary storage device 730 in the form of a program. The CPU 710 reads the program from the auxiliary storage device 730, loads it into the main storage device 720, and executes the above-mentioned processing in accordance with the program.

Furthermore, the CPU 710 reserves a storage area for the storage portion 180 in the main storage device 720 in accordance with the program. Communication with other devices by the communication portion 110 is performed by the interface 740 having a communication function and operating under the control of the CPU 710. The display of various images by the display portion 120 is executed by the interface 740 having a display device and displaying various images under the control of the CPU 710. The operation input portion 130 receives user operations by the interface 740 being equipped with an input device and receiving the user operations under the control of the CPU 710.

In a case where the display control device 310 is implemented in the computer 700, the operations of the control portion 190 and each portion thereof are stored in the form of a program in an auxiliary storage device 730. The CPU 710 reads the program from the auxiliary storage device 730, loads it into the main storage device 720, and executes the above-mentioned processing in accordance with the program.

Furthermore, the CPU 710 reserves a storage area for the storage portion 180 in the main storage device 720 in accordance with the program. Communication with other devices by the communication portion 110 is performed by the interface 740 having a communication function and operating under the control of the CPU 710. Interaction between the display control device 310 and the user is carried out by the interface 740 being provided with a display device and an input device, displaying various images under the control of the CPU 710, and accepting user operations.

In a case where the display system 610 is implemented in the computer 700, its operations are stored in the auxiliary storage device 730 in the form of a program. The CPU 710 reads the program from the auxiliary storage device 730, loads it into the main storage device 720, and executes the above-mentioned processing in accordance with the program.

Furthermore, the CPU 710 reserves a storage area in the main storage device 720 for the display system 610 to perform processing in accordance with the program. Communication between the display system 610 and other devices is performed by the interface 740 having a communication function and operating under the control of the CPU 710. Communication between the display system 610 and other devices is performed by the interface 740 having a communication function and operating under the control of the CPU 710.

Any one or more of the above-mentioned programs may be recorded in the non-volatile recording medium 750. In this case, the interface 740 may read the program from the non-volatile recording medium 750. The CPU 710 may then directly execute the program read by the interface 740, or may temporarily store the program in the main storage device 720 or the auxiliary storage device 730 and then execute it.

In addition, programs for executing all or some of the processing performed by display system 100, satellite data display device 200, display control device 310, and the display system 610 may be recorded on a computer-readable recording medium, and the programs recorded on this recording medium may be read into a computer system and executed to perform the processing of each part. It should be noted that the term "computer system" herein includes an OS (Operating System) and hardware such as peripheral devices.

In addition, the term "computer-readable recording medium" refers to portable media such as flexible disks, optical magnetic disks, ROMs (Read Only Memory), and CD-ROMs (Compact Disc Read Only Memory), as well as storage devices such as hard disks built into computer systems. Furthermore, the above program may be for realizing some of the functions described above, and may further be capable of realizing the functions described above in combination with a program already recorded in the computer system.

Although the example embodiments of the present invention have been described in detail above with reference to the drawings, the specific configurations are not limited to these example embodiments, and designs that do not deviate from the gist of the present invention are also included.

Some or all of the above-described example embodiments can be described as, but is not limited to, the following supplementary notes.

(Supplementary Note 1)

A display system comprising:

a data acquisition means for acquiring data indicating an orbit of an artificial satellite and time-series data related to the artificial satellite, and
a display means for performing a three-dimensional graphics display of the orbit of the artificial satellite and a graph of the time-series data such that the orbit of the artificial satellite matches the time axis of the graph of the time-series data.

(Supplementary Note 2)

The display system according to Supplementary Note 1,
wherein the display means displays the orbit of the artificial satellite and the graph of the time-series data such that the time on the time axis of the graph of the time-series data coincides with the passage time of the artificial satellite in the orbit of the artificial satellite.

(Supplementary Note 3)

The display system according to Supplementary Note 1 or Supplementary Note 2,
wherein the display means displays the orbit of the artificial satellite and the graph of the time-series data such that the orbit of the artificial satellite in the three-dimensional space and a value axis, which is an axis other than the time axis among the axes of the graph of the time-series data, are perpendicular to each other.

(Supplementary Note 4)

The display system according to Supplementary Note 3,
wherein the display means displays an image of the Earth, the orbit of the artificial satellite, and the graph of the time-series data such that the orbit of the artificial satellite is positioned around the Earth in the displayed image, and the direction of the value axis of the graph of the time-series data is oriented outward with respect to the Earth.

(Supplementary Note 5)

A display method including a display system that

acquires data indicating an orbit of an artificial satellite and time-series data related to the artificial satellite; and
performs a three-dimensional graphics display of the orbit of the artificial satellite and a graph of the time-series data such that the orbit of the artificial satellite matches the time axis of the graph of the time-series data.

(Supplementary Note 6)

A recording medium storing a program for causing a computer that controls a display system to:

acquire data indicating an orbit of an artificial satellite and time-series data related to the artificial satellite; and
perform a three-dimensional graphics display of the orbit of the artificial satellite and a graph of the time-series data such that the orbit of the artificial satellite matches the time axis of the graph of the time-series data.

Priority is claimed on Japanese Patent Application No. 2022-170492, filed on October 25, 2022, the content of which is incorporated herein by reference.

Industrial Applicability

The present disclosure may be applied to a display system, a display method, and a recording medium.

Description of Reference Signs

100, 610 Display system
110 Communication portion
120, 612 Display portion
130 Operation input portion
180 Storage portion
190 Control portion
191, 611 Data acquisition portion
192 Coordinate conversion portion
193 Display processing portion
200 Satellite data display device
310 Display control device
320 Display device
330 Input device

## Claims

1. A display system comprising:

   a data acquisition means for acquiring data indicating an orbit of an artificial satellite and time-series data related to the artificial satellite; and
   a display means for performing a three-dimensional graphics display of the orbit of the artificial satellite and a graph of the time-series data such that the orbit of the artificial satellite matches the time axis of the graph of the time-series data.

2. The display system according to claim 1, wherein the display means displays the orbit of the artificial satellite and the graph of the time-series data such that a time on the time axis of the graph of the time-series data coincides with a passage time of the artificial satellite in the orbit of the artificial satellite.

3. The display system according to claim 1 or claim 2, wherein the display means displays the orbit of the artificial satellite and the graph of the time-series data such that the orbit of the artificial satellite in the three-dimensional space and a value axis, which is an axis other than the time axis among axes of the graph of the time-series data, are perpendicular to each other.

4. The display system according to claim 3, wherein the display means displays an image of an Earth, the orbit of the artificial satellite, and the graph of the time-series data such that the orbit of the artificial satellite is positioned around the Earth in the displayed image, and a direction of the value axis of the graph of the time-series data is oriented outward with respect to the Earth.

5. A display method executed by a display system, comprising:

   acquiring data indicating an orbit of an artificial satellite and time-series data related to the artificial satellite; and
   performing a three-dimensional graphics display of the orbit of the artificial satellite and a graph of the time-series data such that the orbit of the artificial satellite matches the time axis of the graph of the time-series data.

6. A recording medium storing a program for causing a computer that controls a display system to:

   acquire data indicating an orbit of an artificial satellite and time-series data related to the artificial satellite; and
   perform a three-dimensional graphics display of the orbit of the artificial satellite and a graph of the time-series data such that the orbit of the artificial satellite matches the time axis of the graph of the time-series data.

FIG. 1

# FIG. 2

○ THREE-DIMENSIONAL GRAPHICS ☐ ✕

L12-1 (L12)
L12-2 (L12)
L12-3 (L12)

P11-1 (P11)
P11-2 (P11)
P11-3 (P11)

V11

M12

A101

M11

L11

L13

L14

# FIG. 3

# FIG. 4

# FIG. 5

FIG. 6

100

200

SATELLITE DATA
DISPLAY DEVICE

180

STORAGE PORTION

190

CONTROL PORTION

191

DATA ACQUISITION
PORTION

120

DISPLAY PORTION

192

COORDINATE
CONVERSION PORTION

193

DISPLAY PROCESSING
PORTION

130

OPERATION INPUT
PORTION

110

COMMUNICATION
PORTION

FIG. 7

SATELLITE DATA DISPLAY DEVICE ~310

100

STORAGE PORTION ~180

CONTROL PORTION ~190

DATA ACQUISITION PORTION ~191

COORDINATE CONVERSION PORTION ~192

DISPLAY PROCESSING PORTION ~193

COMMUNICATION PORTION ~110

DISPLAY DEVICE ~320

INPUT DEVICE ~330

FIG. 8

610

DISPLAY SYSTEM

611

DATA ACQUISITION
PORTION

612

DISPLAY PORTION

FIG. 9

START

S611

ACQUIRE DATA

S612

DISPLAY

END

FIG. 10

710

CPU

700

720

MAIN STORAGE
DEVICE

730

AUXILIARY
STORAGE DEVICE

740

INTERFACE

750

NON-VOLATILE
RECORDING MEDIUM

## INTERNATIONAL SEARCH REPORT

| | International application No. |
|---|---|
| | **PCT/JP2023/026839** |

**A. CLASSIFICATION OF SUBJECT MATTER**

***B64G 3/00***(2006.01)i; ***G06T 11/20***(2006.01)i; ***G06T 19/00***(2011.01)i
FI: B64G3/00; G06T11/20 600; G06T19/00 A

According to International Patent Classification (IPC) or to both national classification and IPC

**B. FIELDS SEARCHED**

Minimum documentation searched (classification system followed by classification symbols)

B64G3/00; G06T11/20; G06T19/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

IEEE Xplore; Wiley Online Library

**C. DOCUMENTS CONSIDERED TO BE RELEVANT**

| Category* | Citation of document, with indication, where appropriate, of the relevant passages | Relevant to claim No. |
|---|---|---|
| A | JP 2009-200601 A (VICTOR CO OF JAPAN LTD) 03 September 2009 (2009-09-03)<br>entire text, all drawings | 1-6 |
| A | WO 2014/027432 A1 (NEC SOLUTION INNOVATORS, LTD.) 20 February 2014 (2014-02-20)<br>entire text, all drawings | 1-6 |
| A | JP 2010-086092 A (MITSUBISHI SPACE SOFTWARE KK) 15 April 2010 (2010-04-15)<br>entire text, all drawings | 1-6 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/026839**

| Patent document cited in search report | | | Publication date (day/month/year) | Patent family member(s) | | | Publication date (day/month/year) |
|---|---|---|---|---|---|---|---|
| JP | 2009-200601 | A | 03 September 2009 | (Family: none) | | | |
| WO | 2014/027432 | A1 | 20 February 2014 | US | 2015/0221121 | A1 | |
| | | | | entire text, all drawings | | | |
| | | | | EP | 2887320 | A1 | |
| | | | | entire text, all drawings | | | |
| | | | | CN | 104603842 | A | |
| | | | | entire text, all drawings | | | |
| JP | 2010-086092 | A | 15 April 2010 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010086092 A

- JP 2022170492 A